# EUROPÄISCHE PATENTSCHRIFT

(11) **EP 3 851 727 B1**
(45) Veröffentlichungstag und Bekanntmachung des Hinweises auf die Patenterteilung: **24.12.2025**
(21) Anmeldenummer: 21150523.5
(22) Anmeldetag: 07.01.2021
(51) Int. Cl.: F16M 11/04, B60R 11/00, F16M 13/02

(54) **PORTABLE HALTERUNG FÜR EINEN FAHRZEUGSITZ ZUM HALTEN EINES GEGENSTANDS**
PORTABLE SUPPORT FOR A VEHICLE SEAT FOR HOLDING AN OBJECT
SUPPORT PORTABLE POUR UN SIÈGE DE VÉHICULE PERMETTANT DE TENIR UN OBJET

(30) Priorität: 20.01.2020 DE 102020000313
(43) Veröffentlichungstag der Anmeldung: 21.07.2021
(73) Patentinhaber: MAN Truck & Bus SE, 80995 München (DE)
(72) Erfinder: Haas, Roman, 80995 München (DE); Flügel, Marcel, 80995 München (DE); Birr, Tatjana, 82362 Weilheim (DE); Mourat Ferat, Ender, 80937 München (DE)
(74) Vertreter: v. Bezold & Partner Patentanwälte - PartG mbB

(56) Entgegenhaltungen:
- US-A- 4 730 760
- US-A1- 2012 194 448
- US-A1- 2012 235 001
- US-A1- 2016 039 349
- US-A1- 2016 257 404
- US-A1- 2017 313 260
- US-A1- 2017 349 200

## Beschreibung

Die Erfindung betrifft eine portable Halterung zum Halten eines Gegenstands an einer Rückenlehne eines Sitzes und einem hochgeklappten Klapptisch an der Rückenlehne.

In der DE 10 2014 220 549 A1 wird ein Klapptisch zur Anordnung in einem Kraftfahrzeug vorgeschlagen. Der Klapptisch ist durch eine Tischplatte gebildet, welche eine Unterseite sowie eine Oberseite aufweist. Die Tischplatte ist an der Rückseite einer Rückenlehne eines Fahrzeugsitzes um eine in Fahrzeugquerrichtung gerichtete Schwenkachse schwenkbar befestigt. Die Tischplatte ist ausgehend von einer Nichtgebrauchsstellung, in der die Unterseite der Tischplatte zur Rückenlehne weist, durch Hochschwenken in eine erste Gebrauchsstellung überführbar und in derselben fixierbar, in der die Tischplatte horizontal angeordnet ist. Durch weiteres Hochschwenken ist die Tischplatte in eine zweite Gebrauchsstellung überführbar und in derselben fixierbar, in der die Oberseite der Tischplatte zur Rückenlehne weist. Die Tischplatte weist auf ihrer Unterseite zumindest ein Mittel zur Halterung wenigstens eines tragbaren elektronischen Gerätes auf.

Die DE 10 2014 222 672 A1 schlägt eine Haltevorrichtung für ein elektronisches Displaygerät mit zumindest einem Display, insbesondere für einen Tablet-Computer oder ein Smartphone oder ein Navigationsgerät, mit einem Befestigungselement zur Befestigung der Haltevorrichtung an einem dieselbe tragenden Teil vor.

Die US 2012/235001 A1 offenbart einen verstellbaren Halter für ein elektronisches Gerät umfassend vier schwenkbar angebrachte Teleskoparme. Der linke, der rechte und der untere Teleskoparm umfassen eine längliche Hülse und einen ausziehbaren Arm, der sich in die Hülse hinein und aus ihr heraus bewegt. Jeder ausziehbare Arm hat eine nach vorne ragende Rippe mit einer erhöhten Kante. Der obere Teleskoparm umfasst eine obere verlängerte Hülse, eine zweite Hülse und einen ausziehbaren Hakenarm. Im Gebrauch werden die Arme gedreht und ausgefahren, um sie an die Länge und Breite eines elektronischen Geräts anzupassen, das dann zwischen den linken, rechten und unteren Rippen eingeklemmt werden kann. Der Hakenarm dient zur Aufhängung des elektronischen Geräts an einer geeigneten Halterung, und ein Neigungsarm dient zur Einstellung des Betrachtungswinkels des eingespannten Geräts.

Die US 2016/039349 A1 offenbart eine Vorrichtung zum Tragen eines Tablets zur Betrachtung der Rückenlehne, die einen flachen Tablet-Eingriffsabschnitt, einen sich davon erstreckenden, flachen Sitzeingriffsabschnitt und eine mit dem Tablet-Eingriffsabschnitt funktionell verbundene Ablagefläche umfasst.

Das Dokument US 2012/194448 A1 betrifft eine Tablet-Vorrichtung mit einer flexiblen Hülle. Eine dünne, flexible Anzeigetechnologie kann in die flexible Hülle integriert werden, ohne den Gesamtformfaktor der Hülle oder der Tablet-Vorrichtung zu beeinträchtigen. Durch das Hinzufügen des integrierten Displays zur flexiblen Hülle wird die Gesamtfunktionalität der Tablet-Vorrichtung erheblich verbessert.

Der Erfindung liegt die Aufgabe zu Grunde, eine alternative und/oder verbesserte Technik zum Halten eines tragbaren Gegenstands an einem Fahrzeugsitz zu schaffen.

Die Aufgabe wird gelöst durch die Merkmale des unabhängigen Anspruchs 1. Vorteilhafte Weiterbildungen sind in den abhängigen Ansprüchen und der Beschreibung angegeben.

Ein Aspekt der vorliegenden Offenbarung betrifft eine portable Halterung zum Halten eines (z. B. plattenförmigen) tragbaren Gegenstands, vorzugsweise eines elektronischen Geräts (z. B. Tablet-PC, Smartphone, Musikspieler usw.) oder eines Printmediums (z. B. Buch, Zeitschrift, Zeitung, Block usw.), an einer Rückenlehne eines Fahrzeugsitzes und einem hochgeklappten Klapptisch an der Rückenlehne. Die Halterung weist einen Steckbereich auf, der dazu ausgebildet ist, zwischen einer Rückseite der Rückenlehne und dem hochgeklappten Klapptisch (z. B. einer Oberseite des hochgeklappten Klapptischs) lösbar eingesteckt zu werden. Die Halterung weist einen Haltebereich auf, der zum lösbaren Halten des Gegenstands ausgebildet ist.

Vorteilhaft kann die portable Halterung somit an der Rückenlehne des Fahrzeugsitzes lösbar gehalten werden, wenn die portable Halterung zum Halten des Gegenstands benutzt wird. Wenn die portable Halterung nicht benötigt wird oder der Klapptisch benötigt wird, kann die portable Halterung einfach entfernt und bspw. in einem Staufach oder Stauabteil des Fahrzeugsitzes verstaut werden. Die portable Halterung kann tragbar sein. Die portable Halterung selbst benötigt zweckmäßig keine aufwendigen Befestigungsmittel zur Befestigung am Fahrzeugsitz, sondern kann einfach bereichsweise zwischen der Rückenlehne und dem hochgeklappten Klapptisch eingesteckt werden. Die Befestigung kann daher besonders einfach und schnell lösbar sein. Es ist auch nicht notwendig, den Fahrzeugsitz zu modifizieren, um die portable Halterung anzubringen.

In einem Ausführungsbeispiel ist der Steckbereich plattenförmig und/oder reckteckförmig ausgeführt. Damit kann der Steckbereich besonders einfach zwischen der Rückenlehne und dem hochgeklappten Klapptisch eingeführt werden.

In einem weiteren Ausführungsbeispiel ist der Steckbereich zwischen der Rückseite der Rückenlehne und dem hochgeklappten Klapptisch lösbar einklemmbar. Damit kann eine besonders sichere Befestigung gewährleistet sein.

Es ist auch möglich, dass ein freies Ende des Steckbereichs sich verjüngt, angefast ist und/oder spitz zuläuft, z. B. um ein Einführen des Steckbereiches zwischen der Rückseite der Rückenlehne und dem hochgeklappten Klapptisch zu vereinfachen.

In einem weiteren Ausführungsbeispiel ist die portable Halterung am Steckbereich zwischen der Rückseite der Rückenlehne und dem hochgeklappten Klapptisch lösbar einhängbar. Auch damit kann eine besonders sichere Befestigung gewährleistet sein.

In einer Ausführungsform ist der Steckbereich angewinkelt oder anwinkelbar zu dem Haltebereich. Alternativ oder zusätzlich kann die portable Halterung bspw. ferner eine Schwenkverbindung (z. B. aufweisend mindestens ein Schwenkscharnier) aufweisen, die den Haltebereich verschwenkbar mit dem Steckbereich verbindet. Dies ermöglicht, dass der Gegenstand in einer ergonomischen Position zur Benutzung gehalten werden kann. Die Schwenkverbindung kann auch ein Einhängen an der Vorderkante des Klapptisches ermöglichen. Zudem kann die Schwenkverbindung dazu genutzt werden, die portable Halterung zum Verstauen zusammenzuklappen oder auseinanderzuklappen.

In einer weiteren Ausführungsform weist die portable Halterung einen Verbindungsbereich auf, der den Steckbereich und den Haltebereich miteinander verbindet. Vorzugsweise kann der Verbindungsbereich im Wesentlichen U-förmig oder V-förmig sein oder im Wesentlichen U-förmig oder V-förmig verformbar sein, und/oder die portable Halterung am Verbindungsbereich an dem hochgeklappten Klapptisch, vorzugsweise einer Vorderkante des hochgeklappten Klapptischs einhängbar sein.

Vorzugsweise kann der Verbindungsbereich die Schwenkverbindung aufweisen.

In einer weiteren Ausführungsform ist der Haltebereich größenveränderbar, ausziehbar, verlängerbar und/oder verbreiterbar (z. B. mittels eines integrierten Verstellmechanismus). Damit kann der Haltebereich bspw. auf unterschiedlich große Gegenstände angepasst werden.

In einer Ausführungsvariante weist der Haltebereich einen, vorzugweise ebenen, Rückseiten-Stützabschnitt auf, der dazu ausgebildet ist, eine Rückseite des Gegenstands, vorzugsweise flächig, abzustützen.

In einer Weiterbildung ist der Rückseiten-Stützabschnitt plattenförmig. Alternativ kann der Rückseiten-Stützabschnitt bspw. rahmenförmig sein und vorzugsweise mindestens eine innere Verbindungsstrebe (z. B. Diagonalstrebe) aufweisen. Damit kann bspw. ein Gewicht der portablen Halterung deutlich verringert werden.

In einer Weiterbildung ist der Rückseiten-Stützabschnitt größenveränderbar, ausziehbar, verlängerbar und/oder verbreiterbar ist (z. B. mittels eines integrierten Verstellmechanismus).

In einer weiteren Ausführungsvariante weist der Haltebereich an einem dem Steckbereich entgegengesetzten Ende des Haltebereichs einen, vorzugweise ebenen, Bodenseiten-Stützabschnitt auf, der dazu ausgebildet ist, eine Bodenseite des Gegenstands, vorzugsweise flächig, abzustützen.

In einer Weiterbildung ist der Rückseiten-Stützabschnitt angewinkelt oder anwinkelbar zu dem Bodenseiten-Stützabschnitt. Alternativ oder zusätzlich kann die portable Halterung ferner eine (z. B. weitere) Schwenkverbindung (z. B. aufweisend mindestens ein Schwenkscharnier) aufweisen, die den Rückseiten-Stützabschnitt verschwenkbar mit dem Bodenseiten-Stützabschnitt verbindet. Damit kann ebenfalls eine Anpassung der portablen Halterung an den jeweils zu haltenden Gegenstand vorgenommen werden.

In einem Ausführungsbeispiel weist die portable Halterung ferner eine Kennzeichnung auf, die weg von dem Haltebereich gerichtet ist. Mittels der Kennzeichnung kann die portable Halterung bspw. kundenspezifisch individualisiert werden.

In einer Weiterbildung ist die Kennzeichnung profiliert, die Kennzeichnung ist an dem Bodenseite-Stützabschnitt angeordnet, und/oder die Kennzeichnung, der Bodenseiten-Stützabschnitt und/oder der Haltebereich ist mittels eines additiven Fertigungsverfahrens hergestellt, besonders bevorzugt als 3D-Druck-Kunststoffteil. Damit kann auf besonders einfache Weise eine kundenspezifische Individualisierung vorgenommen werden, auch in nur kleinen Stückzahlen.

In einem weiteren Ausführungsbeispiel ist die portable Halterung zumindest teilweise, vorzugsweise im Wesentlichen vollständig, mittels eines additiven Fertigungsverfahrens hergestellt, vorzugsweise als 3D-Druck-Kunststoffteil.

Die portable Halterung weist ferner ein elektrisches Gerät, vorzugsweise eine Dockingstation, einen Ladeanschluss, einen Akkumulator und/oder ein Speichermedium, zum kabelgebundenen oder kabellosen Anschließen an den Gegenstand auf, wobei das elektrische Gerät am Haltebereich angeordnet ist (z. B. außen daran oder integriert darin).

Ein weiterer Aspekt betrifft eine Verwendung der portablen Halterung wir hierin offenbart. Die portable Halterung ist mit dem Steckbereich zwischen der Rückseite der Rückenlehne und dem hochgeklappten Klapptisch lösbar eingesteckt, vorzugsweise geklemmt. Der Haltebereich hält den, vorzugsweise plattenförmigen, Gegenstand, vorzugsweise eine Rückseite des Gegenstands stützend, lösbar.

Vorzugsweise kann eine Seite des Steckbereichs an der Rückseite der Rückenlehne anliegen und eine dazu entgegengesetzte Seite des Steckbereichs kann an einer Oberseite des Klapptisches anliegen.

Ein weiterer Aspekt betrifft einen Fahrzeugsitz. Der Fahrzeugsitz weist eine Rückenlehne und einen Klapptisch, der schwenkbar (hochklappbar) an der Rückenlehne angebracht ist, auf. Der Fahrzeugsitz weist ferner eine portable Halterung wie hierin offenbart auf, wobei der Steckbereich lösbar zwischen einer Rückseite der Rückenlehne und dem hochgeklappten Klapptisch einsteckbar oder eingesteckt, vorzugsweise einklemmbar oder eingeklemmt, ist. Das wesentliche Merkmal bei diesem Aspekt ist die portable Halterung.

Ein weiterer Aspekt betrifft ein Fahrzeug zur Personenbeförderung, vorzugweise einen Omnibus. Das Fahrzeug weist mindestens einen Fahrzeugsitz wie hierin offenbart oder mindestens eine portable Halterung wie hierin offenbart auf. Das wesentliche Merkmal bei diesem Aspekt ist die portable Halterung.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Seitenansicht zweier Sitze in einem Fahrzeug;
- Figur 2: eine Draufsicht auf eine beispielhafte portable Halterung gemäß einem Ausführungsbeispiel;
- Figur 3: eine Seitenansicht der beispielhaften portablen Halterung, mit zwei Teilschnitten gemäß einer Linie A-A und einer Linie B-B in Figur 2; und
- Figur 4: eine perspektivische Ansicht einer beispielhaften portablen Halterung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

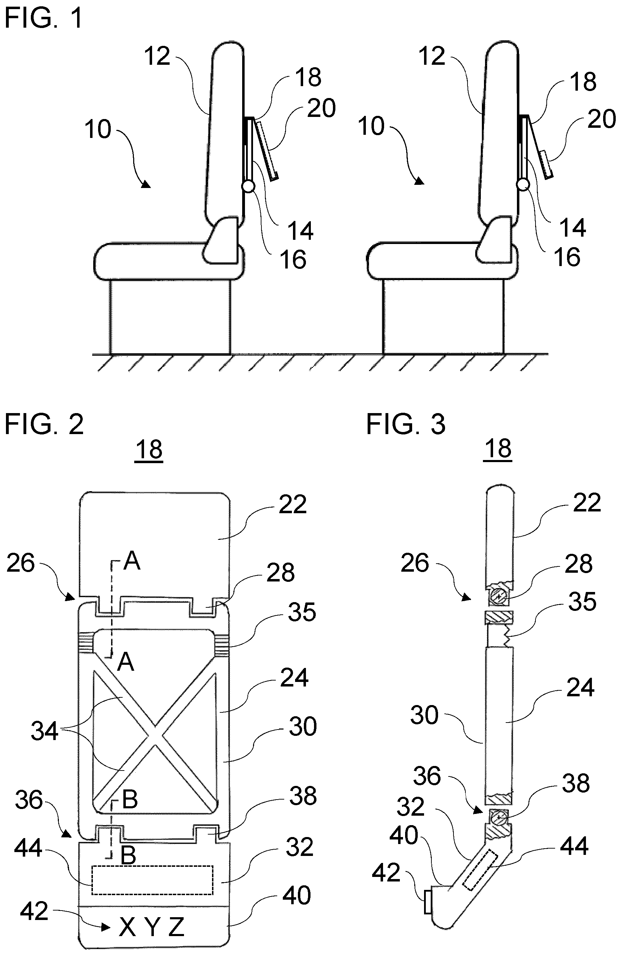

Figur 1 zeigt zwei Fahrzeugsitze 10. Die Fahrzeugsitze 10 sind in einem Fahrzeug zur Personenbeförderung angeordnet. Bevorzugt ist das Fahrzeug ein Nutzfahrzeug, insbesondere ein Omnibus (z. B. Reisebus). Es ist auch möglich, dass das Fahrzeug ein Schienenfahrzeug (z. B. Reisezug), ein Wasserfahrzeug (z. B. Passagierfähre) oder ein Luftfahrzeug (z. B. Passagierflugzeug) ist.

Beide Fahrzeugsitze 10 weisen eine Rückenlehne 12 auf. Mindestens der vordere der beiden Fahrzeugsitze weist einen Klapptisch 14 auf.

Die Rückenlehne 12 kann fest oder schwenkbar mit einem Sitzbereich des Fahrzeugsitzes 10 verbunden sein. Der Fahrzeugsitz 10 kann fest oder verschiebbar mit einem Fahrzeugboden des Fahrzeugs verbunden sein.

Der Klapptisch 14 ist an einer Rückseite der Rückenlehne 12 angeordnet. Der Klapptisch 14 ist verschwenkbar mit der Rückenlehne 12 verbunden. Der Klapptisch 14 ist zwischen einer Gebrauchsstellung und einer Nichtgebrauchsstellung schwenkbar. Eine Schwenkverbindung 16 verbindet den Klapptisch 14 verschwenkbar mit einer Rückseite der Rückenlehne.

In der Gebrauchsstellung (nicht dargestellt in Figur 1) ist der Klapptisch 14 heruntergeklappt bzw. heruntergeschwenkt. In der Gebrauchsstellung weist der Klapptisch 14 eine im Wesentlichen horizontale Ausrichtung auf, z. B. in einem im Wesentlichen rechten Winkel zur Rückenlehne 12. In der Gebrauchsstellung stützt der Klapptisch einen Gegenstand, z. B. Essen oder Laptop, von unten ab.

In der Nichtgebrauchsstellung (dargestellt in Figur 1) ist der Klapptisch 14 hochgeklappt bzw. hochgeschwenkt. In der Nichtgebrauchsstellung kann der Klapptisch 14 im Wesentlichen parallel zu der Rückenlehne 12 ausgerichtet sein.

Eine portable Halterung 18 kann zusammen mit dem Fahrzeugsitz 10 und dessen Klapptisch 14 verwendet werden. Mittels der portablen Halterung 18 kann ein Gegenstand 20 an der Rückenlehne 12 gehalten werden. Der Gegenstand 20 kann so von einem hinter dem jeweiligen Fahrzeugsitz 10 sitzenden Passagier benutzt werden. Der Gegenstand 20 ist bevorzugt plattenförmig. Beispielsweise kann der Gegenstand 20 ein elektronisches Gerät, zum Beispiel ein Tablet-PC, ein Smartphone, ein Musikspieler usw., oder ein Printmedium, zum Beispiel ein Buch, eine Zeitschrift, eine Zeitung, ein Block usw., sein.

Die portable Halterung 18 ist zwischen der Rückseite der Rückenlehne 12 und dem hochgeklappten Klapptisch 14, insbesondere einer Oberseite und/oder einer Vorderkante des hochgeklappten Klapptischs 14, gehalten. Wenn der Klapptisch 14 hochgeklappt ist, kann ein Bereich der portablen Halterung 18 zwischen den Klapptisch 14 und der Rückseite der Rückenlehne 12 eingesteckt werden. So eingesteckt kann die portable Halterung 18 den Gegenstand 20 halten. Bevor der Klapptisch 14 heruntergeklappt wird, sollte die portable Halterung 18 entfernt werden. Sonst kann je nach Ausführung der portablen Halterung das Risiko bestehen, dass die portable Halterung 18 beim Herunterklappen des Klapptisches 14 sich löst und herunterfällt.

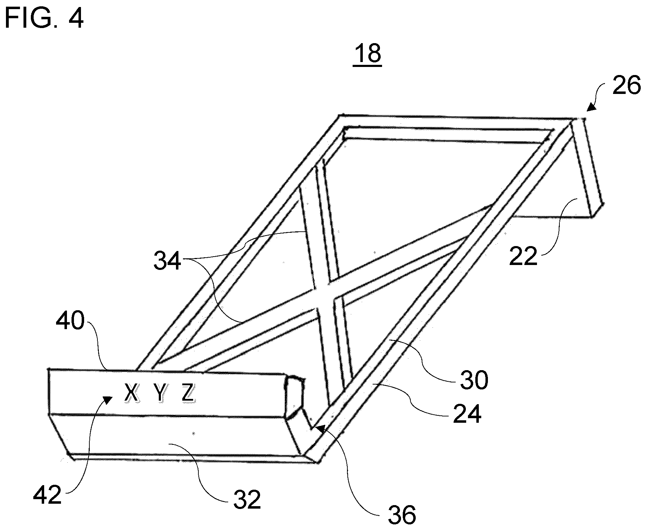

Die portable Halterung 18 kann bspw. wie nachfolgend unter Bezugnahme auf die Figuren 2 bis 4 ausgeführt sein.

Die portable Halterung 18 kann einen Steckbereich 22 und einen Haltebereich 24 aufweisen.

Der Steckbereich 22 kann zwischen der Rückseite der Rückenlehne 12 und der Oberseite des Klapptisches 14 eingesteckt sein. Eine erste Fläche des Steckbereichs 22 kann an der Rückseite der Rückenlehne 12 anliegen. Eine zweite Fläche des Steckbereich 22, die der ersten Fläche entgegengesetzt ist, kann an der Oberseite des Klapptisches 14 anliegen. Besonders bevorzugt ist der Steckbereich 22 zwischen der Rückseite der Rückenlehne 12 und der Oberseite des Klapptisches 14 eingeklemmt. Die Klemmung kann eine sichere, lösbare Befestigung der portablen Halterung 18 am Fahrzeugsitz 10 ermöglichen.

Bevorzugt ist der Steckbereich 22 plattenförmig, z. B. in Form eines Rechtecks. Eine Länge des Steckbereichs 22 kann kleiner sein als eine Länge des Klapptisches 14, bevorzugt kleiner als eine Hälfte der Länge des Klapptisches 14. Eine Breite des Steckbereiches 22 kann kleiner sein als eine Breite des Klapptisches 14, bevorzugt kleiner als eine Hälfte der Breite des Klapptisches 14. Es ist möglich, dass ein freies Ende des Steckbereichs 22 angefast ist, sich verjüngt und/oder spitz zuläuft.

Der Steckbereich 22 und der Haltebereich 24 sind angewinkelt oder anwinkelbar zueinander angeordnet. Der Steckbereich 22 kann über einen (ersten) Verbindungsbereich 26 in den Haltebereich 24 übergehen. Der Verbindungsbereich 26 kann beispielsweise U-förmig (siehe Figur 1) oder V-förmig sein und/oder eine (erste) Schwenkverbindung 28 aufweisen. Die Schwenkverbindung 28 kann den Steckbereich 22 und den Haltebereich 24 verschwenkbar miteinander verbinden. Die Schwenkverbindung 28 kann beispielsweise mindestens ein Scharnier aufweisen. Es ist auch möglich, dass der Verbindungsbereich 26 eine feste bzw. nicht schwenkbare Verbindung zwischen dem Steckbereich 22 und dem Haltebereich 24 schafft. Der Verbindungsbereich 26 kann im Bereich der Vorderkante des Klapptisches 14 angeordnet sein, zum Beispiel an der Vorderkante anliegen. Mittels des Verbindungsbereichs 26 kann die portable Halterung 18 somit am hochgeklappten Klapptisch 14 lösbar eingehängt werden.

In einer Gebrauchsstellung der portablen Halterung 18 (siehe Figur 1) ist der Steckbereich 22 parallel zur Rückenlehne 12 und zum Klapptisch 14 ausgerichtet. Der Haltebereich 24 kann angewinkelt zum Steckbereich 22, zur Rückenlehne 12 und zum Klapptisch 14 sein.

Beispielsweise kann ein Winkel zwischen dem Haltebereich 24 und dem Klapptisch 14 oder der Rückenlehne 12 in einem Bereich zwischen 1° und 90° liegen. Der Winkel kann mittels der Schwenkverbindung 28 verstellt werden, wenn vorhanden. Somit kann eine ergonomische Sicht und/oder Bedienung des in der portablen Halterung 18 gehaltenen Gegenstands 20 ermöglicht werden (siehe Figur 1).

Am Haltebereich 24 kann der Gegenstand 20 lösbar gehalten werden. Beispielsweise kann der Haltebereich 24 einen Rückseiten-Stützabschnitt 30 und einen Bodenseiten-Stützabschnitt 32 aufweisen. Es ist auch möglich, dass der Haltebereich 24 zusätzliche und/oder alternative Elemente (zum Beispiel Klemmelemente, Spannelemente, Bandelemente, Stützelemente usw.) aufweist, die eine lösbare Halterung des Gegenstands 20 am Haltebereich 24 ermöglichen oder unterstützen.

Der Rückseiten-Stützabschnitt 30 kann eine Rückseite des Gegenstands 20 abstützen. Beispielsweise kann eine Rückseite des Gegenstands 20 an dem Rückseiten-Stützabschnitt 30 anliegen, wenn der Gegenstand 20 von der portablen Halterung 18 gehalten ist. Die Rückseite des Gegenstands 20 kann beispielsweise flächig an dem Rückseiten-Stützabschnitt 30 anliegen.

Der Rückseiten-Stützabschnitt 30 kann im Wesentlichen rechteckförmig ausgeführt sein. Beispielsweise kann der Rückseiten-Stützabschnitt 30 plattenförmig oder rahmenförmig sein. Sofern der Rückseiten-Stützabschnitt 30 rahmenförmig ist, kann der Rückseiten-Stützabschnitt 30 mindestens eine Verbindungsstrebe 34 aufweisen, die gegenüberliegende Innenseiten des rahmenförmigen Rückseiten-Stützabschnitts 30 miteinander verbindet.

Der Rückseiten-Stützabschnitt 30 kann einen Verstellmechanismus 35 aufweisen. Rein beispielhaft ist in den Figuren 2 und 3 ein Verstellmechanismus 35 zum Verlängern des Rückseiten-Stützabschnitts 30 dargestellt. Beispielsweise kann der Verstellmechanismus 35 eine Verschiebung eines Hauptteils des Rückseiten-Stützabschnitts 30 ermöglichen, zum Beispiel entlang einer Schiene, einer Zahnstange, einer profilierten Leiste usw. Es ist auch möglich, dass der Verstellmechanismus 35 eine Breitenverstellung des Rückseiten-Stützabschnitts 30 oder allgemein eine Größenverstellung des Rückseiten-Stützabschnitts 30 ermöglicht. Der Rückseiten-Stützabschnitt 30 kann in unterschiedlichen Längeneinstellungen (Größeneinstellungen) arretierbar und/oder fixierbar sein.

Der Bodenseiten-Stützabschnitt 32 kann einen Boden des Gegenstands 20 abstützen. Beispielsweise kann eine Bodenkante des Gegenstands 20 an dem Bodenseiten-Stützabschnitt 32 anliegen, wenn der Gegenstand 20 von der portablen Halterung 18 gehalten ist.

Der Rückseiten-Stützabschnitt 30 und der Bodenseiten-Stützabschnitt 32 sind angewinkelt oder anwinkelbar zueinander angeordnet. Der Rückseiten-Stützabschnitt 30 kann über einen (zweiten) Verbindungsbereich 36 in den Bodenseiten-Stützabschnitt 32 übergehen. Der Verbindungsbereich 36 kann beispielsweise V-förmig sein und/oder eine (zweite) Schwenkverbindung 38 aufweisen. Die Schwenkverbindung 38 kann den Rückseiten-Stützabschnitt 30 und den Bodenseiten-Stützabschnitt 32 verschwenkbar miteinander verbinden. Die Schwenkverbindung 38 kann beispielsweise mindestens ein Scharnier aufweisen. Es ist auch möglich, dass der Verbindungsbereich 36 eine feste bzw. nicht schwenkbare Verbindung zwischen dem Rückseiten-Stützabschnitt 30 und dem Bodenseiten-Stützabschnitt 32 schafft.

Der Bodenseiten-Stützabschnitt 32 kann bspw. plattenförmig sein, z. B. in Rechteckform. Es ist möglich, dass der Rückseiten-Stützabschnitt 30 einen Stützvorsprung 40 aufweist. Der Stützvorsprung 40 kann auf einer Vorderseite des Bodenseiten-Stützabschnitts 32 angeordnet sein. Der Stützvorsprung 40 kann eine vordere Bodenkante des Gegenstands 20 abstützen. Der Stützvorsprung 40 kann ein Verrutschen des Gegenstands 20 in oder aus der portablen Halterung 18 verhindern.

Der Bodenseiten-Stützabschnitt 32 (oder ein anderer Teil der portablen Halterung 18) kann vorzugsweise eine Kennzeichnung 42 aufweisen. Die Kennzeichnung 42 ist in einer Richtung weg von dem Haltebereich 24 gerichtet. Die Kennzeichnung 42 kann somit in einer Blickrichtung der Person, die die portable Halterung 18 benutzt, sein. Die Kennzeichnung 42 kann profiliert hervorstehen. Die Kennzeichnung 42 kann je nach Kundenwunsch angefertigt werden. Die Kennzeichnung 42 kann z. B. eine Werbung, ein Markenlogo, eine Anleitung oder ein Sicherheitshinweis usw. aufweisen.

Besonders bevorzugt kann die portable Halterung 18 mittels eines additiven Fertigungsverfahrens hergestellt sein, z. B. als 3D-Druck-Kunststoffteil. Zumindest kann jedoch der Stützvorsprung 40 oder der Bodenseiten-Stützabschnitt 32 und damit die Kennzeichnung 42 mittels des additiven Fertigungsverfahrens hergestellt sein. Die Kennzeichnung 42 kann somit profiliert hervorstehen und nach jeweiligem Kundenwunsch angefertigt werden.

Es ist möglich, dass die portable Halterung 18 selbst ein elektrisches (z. B. elektronisches) Gerät 44, wie z. B. eine Dockingstation, einen Ladeanschluss, einen Akkumulator und/oder ein Speichermedium, aufweist. Damit kann bspw. der Gegenstand 20, wenn es sich hierbei um ein elektronisches Gerät handelt, aufgeladen werden, während die portable Halterung 18 den Gegenstand 20 hält. Die Verbindung zum Gegenstand 20 kann kabellos oder kabelgebunden (z. B. induktives Laden) sein. Bevorzugt kann das elektrische Gerät 44 im oder am Bodenseiten-Stützabschnitt 32 oder Rückseiten-Stützabschnitt 30 (oder jeglichem anderen Abschnitt oder Bereich der portablen Halterung 18) angeordnet sein. Beispielsweise kann das elektrische Gerät 44 in der portablen Halterung 18, vorzugweise dem Haltebereich 24, integriert oder außen daran befestigt sein.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration des Steckbereichs und/oder des Haltebereichs des unabhängigen Anspruchs 1 offenbart. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10: Fahrzeugsitz
- 12: Rückenlehne
- 14: Klapptisch
- 16: Schwenkverbindung
- 18: Portable Halterung
- 20: Gegenstand
- 22: Steckbereich
- 24: Haltebereich
- 26: Verbindungsbereich
- 28: Schwenkverbindung
- 30: Rückseiten-Stützabschnitt
- 32: Bodenseiten-Stützabschnitt
- 34: Verbindungsstrebe
- 35: Verstellmechanismus
- 36: Verbindungsbereich
- 38: Schwenkverbindung
- 40: Stützvorsprung
- 42: Kennzeichnung
- 44: Elektrisches Gerät

## Patentansprüche

1. Portable Halterung zum Halten eines tragbaren Gegenstands (20), vorzugsweise eines elektronischen Geräts oder eines Printmediums, an einer Rückenlehne (12) eines Fahrzeugsitzes (10) und einem hochgeklappten Klapptisch (14) an der Rückenlehne (12), aufweisend:
einen Steckbereich (22), der dazu ausgebildet ist, zwischen einer Rückseite der Rückenlehne (12) und dem hochgeklappten Klapptisch (14) lösbar eingesteckt zu werden;
einen Haltebereich (24), der zum lösbaren Halten des Gegenstands (20) ausgebildet ist; und **dadurch gekennzeichnet, dass** die portable Halterung
ein elektrisches Gerät (44), vorzugsweise eine Dockingstation, ein Ladeanschluss, ein Akkumulator und/oder ein Speichermedium, zum kabelgebundenen oder kabellosen Anschließen an den Gegenstand (20) aufweist, wobei das elektrische Gerät (44) am Haltebereich (24) angeordnet ist.

2. Portable Halterung (18) nach Anspruch 1, wobei:
der Steckbereich (22) plattenförmig und/oder reckteckförmig ausgeführt ist; und/oder
der Steckbereich (22) zwischen der Rückseite der Rückenlehne (12) und dem hochgeklappten Klapptisch (14) lösbar einklemmbar ist; und/oder
die portable Halterung (18) am Steckbereich (22) zwischen der Rückseite der Rückenlehne (12) und dem hochgeklappten Klapptisch (14) lösbar einhängbar ist.

3. Portable Halterung (18) nach Anspruch 1 oder Anspruch 2, wobei:
der Steckbereich (22) angewinkelt oder anwinkelbar zu dem Haltebereich (24) ist;
und/oder
wobei die portable Halterung (18) ferner eine Schwenkverbindung (28), die den Haltebereich (24) verschwenkbar mit dem Steckbereich (22) verbindet, aufweist.

4. Portable Halterung (18) nach einem der vorherigen Ansprüche, ferner aufweisend:
einen Verbindungsbereich (26), der den Steckbereich (22) und den Haltebereich (24) miteinander verbindet, wobei vorzugsweise:
der Verbindungsbereich (26) im Wesentlichen U-förmig oder V-förmig ist oder verformbar ist; und/oder
die portable Halterung (18) am Verbindungsbereich (26) an dem hochgeklappten Klapptisch (14), vorzugsweise einer Vorderkante des hochgeklappten Klapptischs (14) einhängbar ist.

5. Portable Halterung (18) nach einem der vorherigen Ansprüche, wobei:
der Haltebereich (24) größenveränderbar, ausziehbar, verlängerbar und/oder verbreiterbar ist.

6. Portable Halterung (18) nach einem der vorherigen Ansprüche, wobei:
der Haltebereich (24) einen, vorzugweise ebenen, Rückseiten-Stützabschnitt (30) aufweist, der dazu ausgebildet ist, eine Rückseite des Gegenstands (20), vorzugsweise flächig, abzustützen.

7. Portable Halterung (18) nach Anspruch 6, wobei:
der Rückseiten-Stützabschnitt (30) plattenförmig ist oder der Rückseiten-Stützabschnitt (30) rahmenförmig ist und mindestens eine innere Verbindungsstrebe (34) aufweist; und/oder
der Rückseiten-Stützabschnitt (30) größenveränderbar, ausziehbar, verlängerbar und/oder verbreiterbar ist.

8. Portable Halterung (18) nach einem der vorherigen Ansprüche, wobei:
der Haltebereich (24) an einem dem Steckbereich (22) entgegengesetzten Ende des Haltebereichs (24) einen, vorzugweise ebenen, Bodenseiten-Stützabschnitt (32) aufweist, der dazu ausgebildet ist, eine Bodenseite des Gegenstands (20), vorzugsweise flächig, abzustützen.

9. Portable Halterung (18) nach Anspruch 8, wobei:
der Rückseiten-Stützabschnitt (30) angewinkelt oder anwinkelbar zu dem Bodenseiten-Stützabschnitt (32) ist, und/oder
die portable Halterung (18) ferner eine Schwenkverbindung (38), die den Rückseiten-Stützabschnitt (30) verschwenkbar mit dem Bodenseiten-Stützabschnitt (32) verbindet, aufweist.

10. Portable Halterung (18) nach einem der vorherigen Ansprüche, ferner aufweisend:
eine Kennzeichnung (42), die weg von dem Haltebereich (24) gerichtet ist, wobei vorzugsweise:
die Kennzeichnung (42) profiliert ist; und/oder
die Kennzeichnung (42) an dem Bodenseiten-Stützabschnitt (32) angeordnet ist;
und/oder
die Kennzeichnung (42), der Bodenseiten-Stützabschnitt (32) und/oder der Haltebereich (24) mittels eines additiven Fertigungsverfahrens hergestellt ist, besonders bevorzugt als 3D-Druck-Kunststoffteil.

11. Portable Halterung (18) nach einem der vorherigen Ansprüche, wobei:
die portable Halterung (18) zumindest teilweise, vorzugsweise im Wesentlichen vollständig, mittels eines additiven Fertigungsverfahrens hergestellt ist, vorzugsweise als 3D-Druck-Kunststoffteil.

12. Verwendung der portablen Halterung (18) nach einem der vorherigen Ansprüche, mit:
dem Steckbereich (22) lösbar eingesteckt, vorzugsweise geklemmt, zwischen der Rückseite der Rückenlehne (12) und dem hochgeklappten Klapptisch (14); und
dem Haltebereich (24) lösbar haltend den, vorzugsweise plattenförmigen, Gegenstand (20), vorzugsweise eine Rückseite des Gegenstands (20) stützend.

13. Fahrzeugsitz (10), aufweisend:
eine Rückenlehne (12);
einen Klapptisch (14), der schwenkbar an der Rückenlehne (12) angebracht ist;
und
eine portable Halterung (18) nach einem der Ansprüche 1 bis 11, wobei der Steckbereich (22) zwischen einer Rückseite der Rückenlehne (12) und dem hochgeklappten Klapptisch (14) lösbar einsteckbar oder eingesteckt, vorzugsweise einklemmbar oder eingeklemmt, ist.

14. Fahrzeug zur Personenbeförderung, vorzugweise Omnibus, aufweisend:
mindestens einen Fahrzeugsitz (10) nach Anspruch 13 oder mindestens eine portable Halterung (18) nach einem der Ansprüche 1 bis 11.

## Claims

1. Portable holder for holding a portable object (20), preferably an electronic device or a print medium, on a backrest (12) of a vehicle seat (10) and a folded-up folding table (14) on the backrest (12), comprising:
a plugging area (22) designed to be detachably plugged in between a rear side of the backrest (12) and the folded-up folding table (14);
a holding area (24) designed to detachably hold the object (20); and
**characterized in that** the portable holder comprises
an electrical device (44), preferably a docking station, a charging port, a battery, and/or a storage medium, for wired or wireless connection to the object (20), wherein the electrical device (44) is arranged on the holding area (24).

2. Portable holder (18) according to claim 1, wherein:
the plugging area (22) is designed in a plate-shaped and/or rectangular shaped;
and/or
the plugging area (22) can be detachably clamped between the rear side of the backrest (12) and the folded-up folding table (14); and/or
the portable holder (18) can be detachably hooked onto the plugging area (22) between the rear side of the backrest (12) and the folded-up folding table (14).

3. Portable holder (18) according to claim 1 or claim 2, wherein:
the plugging area (22) is angled or can be angled relative to the holding area (24);
and/or
wherein the portable holder (18) further comprises a pivot connection (28) that pivotably connects the holding area (24) to the plugging area (22).

4. Portable holder (18) according to any of the preceding claims, further comprising:
a connecting area (26) connecting the plugging area (22) and the holding area (24) to each other, wherein preferably:
the connecting area (26) is essentially U-shaped or V-shaped or is deformable;
and/or
the portable holder (18) can be hooked onto the connecting area (26) on the folded-up folding table (14), preferably a front edge of the folded-up folding table (14).

5. Portable holder (18) according to one of the preceding claims, wherein:
the holding area (24) is resizable, extendable, lengthenable, and/or widenable.

6. Portable holder (18) according to one of the preceding claims, wherein:
the holding area (24) comprises a, preferably flat, rear support section (30) which is designed to support a rear side of the object (20), preferably in an areal manner.

7. Portable holder (18) according to claim 6, wherein:
the rear support section (30) is plate-shaped or the rear support section (30) is frame-shaped and comprises at least one inner connecting strut (34); and/or
the rear support section (30) is resizable, extendable, lengthenable, and/or widenable.

8. Portable holder (18) according to one of the preceding claims, wherein:
the holding area (24) comprises, at an end of the holding area (24) opposite the plugging area (22), a, preferably flat, bottom support section (32) which is designed to support a bottom side of the object (20), preferably in an areal manner.

9. Portable holder (18) according to claim 8, wherein:
the rear support section (30) is angled or angleable relative to the bottom support section (32), and/or
the portable holder (18) further comprises a pivot connection (38) that pivotably connects the rear support section (30) to the bottom support section (32).

10. Portable holder (18) according to any of the preceding claims, further comprising:
a marking (42) directed away from the holding area (24), wherein preferably:
the marking (42) is profiled; and/or
the marking (42) is arranged on the bottom support section (32); and/or
the marking (42), the bottom support section (32) and/or the holding area (24) are manufactured using an additive manufacturing process, particularly preferably as a 3D-printed plastic part.

11. Portable holder (18) according to one of the preceding claims, wherein:
the portable holder (18) is produced at least partially, preferably substantially completely, by means of an additive manufacturing process, preferably as a 3D-printed plastic part.

12. Use of the portable holder (18) according to one of the preceding claims, with:
the plugging area (22) detachably plugged in, preferably clamped, between the rear side of the backrest (12) and the folded-up folding table (14); and
the holding area (24) detachably holding the preferably plate-shaped object (20), preferably supporting a rear side of the object (20).

13. Vehicle seat (10) comprising:
a backrest (12);
a folding table (14) pivotable on the backrest (12) mounted; and
a portable holder (18) according to one of claims 1 to 11, wherein the plugging area (22) can be detachably inserted or is inserted, preferably clamped or is clamped, between a rear side of the backrest (12) and the folded-up folding table (14).

14. Vehicle for passenger transport, preferably a bus, comprising:
at least one vehicle seat (10) according to claim 13 or at least one portable holder (18) according to one of claims 1 to 11.

## Revendications

1. Support portable destiné à maintenir un objet portable (20), de préférence un appareil électronique ou un support imprimé, sur un dossier (12) d'un siège de véhicule (10) et une tablette rabattable (14) relevée sur le dossier (12), comprenant :
une zone d'insertion (22) conçue pour être insérée de manière amovible entre une face arrière du dossier (12) et la tablette rabattable relevée (14) ;
une zone de maintien (24) conçue pour maintenir de manière amovible l'objet (20) ; et **caractérisé en ce que** le support portable
comprend un appareil électrique (44), de préférence une station d'accueil, un connecteur de charge, un accumulateur et/ou un support de stockage, pour la connexion filaire ou sans fil à l'objet (20), l'appareil électrique (44) étant agencé sur la zone de maintien (24).

2. Support portable (18) selon la revendication 1, dans lequel :
la zone d'insertion (22) est réalisée en forme de plaque et/ou de rectangle ; et/ou
la zone d'insertion (22) est apte à être serrée de manière amovible entre la face arrière du dossier (12) et la tablette rabattable relevée (14) ; et/ou
le support portable (18) est apte à être accroché de manière amovible au niveau de la zone d'insertion (22) entre la face arrière du dossier (12) et la tablette rabattable relevée (14).

3. Support portable (18) selon la revendication 1 ou la revendication 2, dans lequel :
la zone d'insertion (22) est inclinée ou est apte à être inclinée par rapport à la zone de maintien (24) ; et/ou le support portable (18) comprend en outre une articulation de pivotement (28) qui relie de manière pivotante la zone de maintien (24) à la zone d'insertion (22).

4. Support portable (18) selon l'une des revendications précédentes, comprenant en outre :
une zone de liaison (26) qui relie la zone d'insertion (22) et la zone de maintien (24) l'une à l'autre, de préférence :
la zone de liaison (26) est essentiellement en forme de U ou de V ou est déformable ; et/ou
le support portable (18) est apte à être accroché au niveau de la zone de liaison (26) à la tablette rabattable relevée (14), de préférence à un bord avant de la tablette rabattable relevée (14).

5. Support portable (18) selon l'une des revendications précédentes, dans lequel :
la zone de maintien (24) est réglable en taille, extensible, allongeable et/ou élargissable.

6. Support portable (18) selon l'une des revendications précédentes, dans lequel :
la zone de maintien (24) comprend une partie (30) de support de côté arrière, de préférence plane, qui est conçue pour soutenir une face arrière de l'objet (20), de préférence à plat.

7. Support portable (18) selon la revendication 6, dans lequel :
la partie (30) de support de côté arrière est en forme de plaque ou la partie (30) de support de côté arrière est en forme de cadre et comprend au moins une entretoise de liaison intérieure (34) ; et/ou
la partie (30) de support de côté arrière est réglable en taille, extensible, allongeable et/ou élargissable.

8. Support portable (18) selon l'une des revendications précédentes, dans lequel :
la zone de maintien (24) comprend, à une extrémité de la zone de maintien (24) opposée à la zone d'insertion (22), une partie (32) de support de côté inférieur, de préférence plane, qui est conçue pour soutenir un côté inférieur de l'objet (20), de préférence à plat.

9. Support portable (18) selon la revendication 8, dans lequel :
la partie (30) de support de côté arrière est inclinée ou est apte à être inclinée par rapport à la partie (32) de support de côté inférieur, et/ou
le support portable (18) comprend en outre une articulation pivotante (38) qui relie de manière pivotante la partie (30) de support de côté arrière à la partie de support (32) côté inférieur.

10. Support portable (18) selon l'une des revendications précédentes, comprenant en outre :
un marquage (42) qui est orienté à l'opposé de la zone de maintien (24), de préférence :
le marquage (42) étant profilé ; et/ou
le marquage (42) étant agencé sur la partie (32) de support de côté inférieur ; et/ou
le marquage (42), la partie (32) de support de côté inférieur et/ou la zone de maintien (24) étant fabriqués au moyen d'un procédé de fabrication additive, de façon particulièrement préférée sous forme de pièce en matière plastique imprimée en 3D.

11. Support portable (18) selon l'une des revendications précédentes, dans lequel :
le support portable (18) étant fabriqué au moins en partie, de préférence essentiellement en totalité, au moyen d'un procédé de fabrication additive, de préférence sous forme de pièce en matière plastique imprimée en 3D.

12. Utilisation du support portable (18) selon l'une des revendications précédentes, avec :
la zone d'insertion (22) insérée de manière amovible, de préférence serrée, entre la face arrière du dossier (12) et la tablette rabattable relevée (14) ; et
la zone de maintien (24) maintenant de manière amovible l'objet (20), de préférence en forme de plaque, de préférence en soutenant une face arrière de l'objet (20).

13. Siège de véhicule (10) comprenant :
un dossier (12) ;
une tablette rabattable (14) qui est montée de manière pivotante sur le dossier (12) ; et
un support portable (18) selon l'une des revendications 1 à 11, la zone d'insertion (22) étant apte à être insérée ou étant insérée de manière amovible, de préférence serrée ou apte à être serrée, entre une face arrière du dossier (12) et la tablette rabattable (14) relevée.

14. Véhicule destiné au transport de personnes, de préférence autobus, comprenant :
au moins un siège de véhicule (10) selon la revendication 13 ou au moins un support portable (18) selon l'une des revendications 1 à 11.
